# FASCICULE DE BREVET EUROPEEN

(11) **EP 0 378 491 B1**
(45) Date de publication et mention de la délivrance du brevet: **07.04.1993**
(21) Numéro de dépôt: 90420013.6
(22) Date de dépôt: 09.01.1990
(51) Int. Cl.: A22C 21/00

(54) **Dispositif pour l'arrachement des ailes et/ou des coracoides d'une volaille**
Vorrichtung zum Entfernen der Flügel von Geflügel
Device for dewinging poultry

(30) Priorité: 13.01.1989 FR 8900569
(43) Date de publication de la demande: 18.07.1990
(73) Titulaire: ETABLISSEMENTS ARRIVE S.A. (Société Anonyme de droit français), F-85250 Saint Fulgent (FR); UNION FINANCIERE POUR LE DEVELOPPEMENT DE L'ECONOMIE CEREALIERE-UNIGRAINS (Société Anonyme de droit français), F-75016 Paris (FR)
(72) Inventeur: Villemin, Daniel, F-94430 Chennevières S/ Marne (FR); Plusa, Janusz, F-94370 Sucy en Brie (FR); Guilbaud, Daniel, F-85250 Saint Fulgent (FR); Leclère, Jean, F-94000 Créteil (FR)
(74) Mandataire: Maureau, Philippe

(56) Documents cités:
- EP-A- 0 159 076
- FR-A- 2 593 675
- US-A- 4 477 942
- US-A- 4 503 587

## Description

La présente invention a pour objet un dispositif pour l'arrachement des ailes et/ou des coracoïdes d'une volaille.

Les volailles comestibles de grosse taille, et notamment les dindes, qui sont rarement vendues entières, sont découpées après abattage en un certain nombre de morceaux conditionnés indépendamment les uns des autres.

Dans le cas d'une dinde, par exemple, après que les abats aient été retirés par un orifice naturel et/ou par une incision ménagée dans la partie postérieure de l'animal, celui-ci est ressué, puis il est suspendu à une chaîne dont le déplacement assure l'amenée de la carcasse à un certain nombre de postes où les différents morceaux sont désossés et découpés manuellement par des opérateurs. Ce traitement nécessite une main-d'oeuvre importante tout en présentant l'inconvénient que la qualité de la découpe dépend de l'habileté de l'opérateur, et qu'une quantité non négligeable de viande reste accrochée à la carcasse en fin de traitement, ce qui constitue une perte pour le conditionneur. Il faut en effet considérer que le squelette osseux d'une volaille ne possède pas une surface extérieure parfaitement convexe, mais comporte également, compte tenu de la morphologie de l'animal, des parties en creux hors desquelles il n'est pas aisé de retirer la viande qui y est logée.

Le document FR-A-2 593 675 qui montre les caractéristiques du préambule de la revendication 1, concerne un dispositif pour découper les ailes d'une volaille comportant deux pinces destinées à immobiliser la carcasse de la volaille, qui est suspendue, et à écarter les ailes afin de faciliter l'introduction d'outils de coupe. A cet effet, les pinces sont associées à des moyens d'actionnement à l'ouverture et à la fermeture, à des moyens de déplacement longitudinal et à ses moyens de déplacement latéral.

La morphologie générale d'une volaille peut être définie de la façon suivante :
L'extrémité avant du thorax se ferme sur une architecture osseuse déterminée par la colonne vertébrale, à la base du cou de l'animal, les clavicules et les coracoïdes.

La partie centrale de la carcasse est délimitée par la colonne vertébrale, les côtes et le sternum.

La partie postérieure du bassin de forme plus ou moins concave et se terminant par le pygostyle et l'ischium comporte les zones d'articulation des fémurs ainsi que les orifices iliaques.

La complexité de cette structure explique les difficultés qu'il y a à séparer parfaitement la viande de la structure osseuse.

Les coracoïdes sont parmi les éléments les plus gênants car ils forment des parties débordant de la carcasse osseuse et délimitant avec cette dernière des surfaces en creux hors desquelles il est difficile d'extraire la viande. Il a donc été imaginé de couper ou de désarticuler les coracoïdes et de procéder, au cours du processus de découpe de la volaille, à leur arrachement pour permettre de récupérer les viandes logées dans les parties en creux, la viande de fourchette, la viande de dos et éventuellement la viande de coracoïdes, et pour permettre à l'outil de coupe de passer le plus près possible de la carcasse, le rendement matière global étant ainsi fortement amélioré.

Il existe différentes possibilités pour procéder à une telle opération.

Une première possibilité consiste à réaliser la coupe de tendons à la jonction entre chaque coracoïde et le sternum, à luxer les coracoïdes, puis à arracher les ailes avec les omoplates.

Une seconde possibilité consiste à couper les coracoïdes avant de réaliser l'arrachement des ailes, la partie des coracoïdes attenante au sternum demeurant sur la carcasse.

Une troisième possibilité consiste à réaliser une découpe au niveau de l'articulation de chaque aile avant de procéder à l'arrachement des seules ailes.

La présente invention concerne précisément un dispositif permettant de réaliser automatiquement l'arrachement des ailes d'une volaille et de la chair attenante, ainsi qu'éventuellement des coracoïdes, en fonction de la technique préparatoire choisie.

A cet effet, le dispositif qu'elle concerne, du type comportant des pinces destinées à enserrer les ailes, animées de mouvements de déplacement longitudinal et transversal, est caractérisé en ce qu'il comporte un outil de contention de la volaille par l'intérieur assurant l'immobilisation de celle-ci, un bâti sur lequel est monté déplaçable, en direction de l'outil de contention, et dans le plan médian longitudinal du dispositif, un chariot, dont l'extrémité avant est équipée de deux pinces dont les ouvertures sont tournées du côté de l'outil de contention, et des moyens de commande tels que les pinces étant en position ouverte et rapprochées l'une de l'autre, il est procédé successivement à un mouvement d'avance du chariot jusqu'à ce que les pinces viennent enserrer les ailes au niveau de leur articulation, à la fermeture des pinces, puis à un mouvement combiné d'avance du chariot et de déplacement des pinces vers l'extérieur, et enfin à l'ouverture des pinces avant leur rapprochement et avant le recul du chariot.

Dans la mesure où les coracoïdes ont été préalablement sciés, cassés, fendus ou désarticulés, et où la partie avant des filets a été découpée, cette opération permet de réaliser l'arrachement des coracoïdes, ainsi que le décollement des ailes et de la partie avant des filets, laissant un libre accès à la carcasse osseuse, pour la poursuite de la découpe des filets. Cette opération est favorisée par le ménagement préalable d'une fente dorsale.

Conformément à une caractéristique de l'invention, le chariot est équipé de deux arbres cylindriques parallèles et orientés parallèlement à sa direction de déplacement, à l'extrémité libre de chacun desquels est fixée une pince de façon excentrée, les deux pinces étant montées de façon symétrique par rapport au plan médian longitudinal du dispositif, et des moyens étant prévus pour actionner les arbres cylindriques dans des sens de rotation inverses l'un de l'autre. La rotation des arbres dans un sens ou dans l'autre se traduit par un mouvement d'écartement ou de rapprochement des pinces.

Avantageusement, les moyens d'entraînement en rotation des arbres sont constitués par un vérin disposé dans le plan médian longitudinal et orienté perpendiculairement aux arbres, dont la tige est équipée de moyens d'entraînement en rotation en sens inverse l'un de l'autre des deux arbres.

Selon une autre caractéristique de ce dispositif, les moyens d'actionnement de chaque pince sont constitués par un vérin monté, à l'extrémité libre de l'arbre considéré, sur le rapport de cette pince.

Selon une forme d'exécution préférentielle, l'axe de déplacement du chariot portant les pinces forme un angle avec l'axe de l'outil de contention de la volaille, l'axe de déplacement du chariot étant incliné de haut en bas et de son extrémité la plus éloignée de la volaille vers son extrémité la plus proche de celle-ci, dans la mesure où l'axe de l'outil de contention est horizontal.

Cette inclinaison favorise la désarticulation et permet de mieux arracher la chair vis-à-vis de la carcasse, en tenant compte de l'orientation des fibres musculaires.

Avantageusement, ce dispositif comprend également un système de blocage externe de la volaille sur l'outil de contention, constitué par une pince qui, destiné à venir pincer le sternum de la volaille est montée à l'extrémité de la tige d'un vérin d'axe vertical, solidaire du bâti. Ce blocage est mis en oeuvre avant le début de l'opération d'arrachement des ailes et/ou des coracoïdes.

De toute façon, l'invention sera bien comprise à l'aide de la description qui suit, en référence au dessin schématique annexé, représentant à titre d'exemple, une forme d'exécution de ce dispositif :
Figure 1 en est une vue de côté ;
Figure 2 est une vue très schématique de dessus du dispositif de prise et d'arrachement des ailes et/ou des coracoïdes ;
Figure 3 est une vue de côté du système de blocage de la volaille ;
Figure 4 est une vue en coupe très schématique représentant l'accrochage des coracoïdes par les pinces assurant leur arrachement.

Le dispositif représenté au dessin comprend un bâti 2 comportant une partie supérieure 3 inclinée par rapport à la verticale, sur laquelle est fixé le corps d'un vérin 4. La tige 5 de ce vérin porte un chariot 6. Le mouvement de déplacement du chariot 6 est assuré à l'aide du vérin 4, les fins de course étant commandées par contrôle de la pression, lors des appuis respectivement sur la volaille et contre une butée 7. A son extrémité supérieure le chariot 6 est équipé de deux arbres cylindriques 8, parallèles à l'axe du vérin, et disposés de part et d'autre du plan médian longitudinal du dispositif. Ces deux arbres cylindriques 8 sont montés pivotants relativement au chariot 6, et sont susceptibles d'être entraînés axialement par celui-ci.

Entre les deux arbres cylindriques 8 est monté un vérin 9 disposé centré sur le plan médian longitudinal du dispositif, dont le corps est solidaire de la partie supérieure 3 du bâti. La tige 10 de ce vérin est équipée de moyens tels qu'une crémaillère entraîne en rotation dans des sens inverses l'un de l'autre, les deux arbres cylindriques 8. A l'extrémité libre de chaque arbre cylindrique 8 est montée, sur un support excentré 12, une pince 13. Cette pince 13 comporte un mors fixe 14 et un mors pivotant 15 actionné par un vérin 16.

Le dispositif selon l'invention comprend également, fixé sur un support 17 solidaire du bâti, un vérin 18 d'axe vertical, dont l'extrémité de la tige 19 est équipée d'une pince 20, susceptible de venir verrouiller le sternum 22 d'une volaille 23, fixée par l'intérieur sur un outil de contention 24 d'axe horizontal.

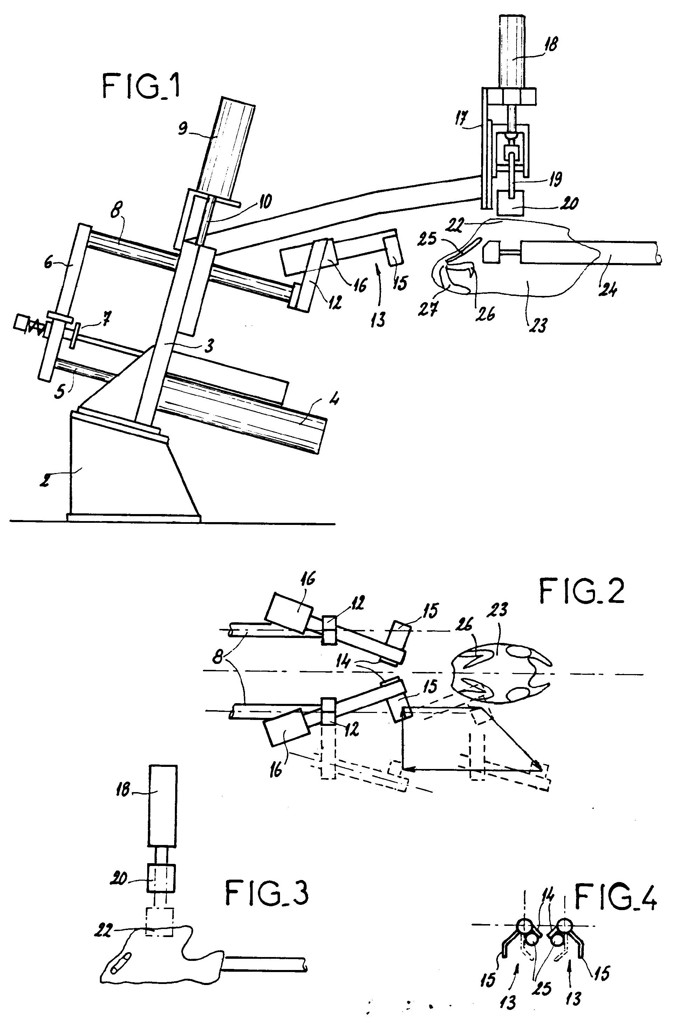

La cinématique de ce dispositif est la suivante : Après détection de la présence d'une volaille, il est procédé par actionnement du vérin 18 à la descente de la pince 20, puis à la fermeture de celle-ci sur le sternum 22 de la volaille. Les deux pinces 13 étant en position rapprochée et ouvertes, et le chariot étant en position reculée, il est procédé tout d'abord à un mouvement d'avance du chariot sous l'action du vérin 4. Au cours de ce mouvement, les deux pinces 13 viennent enserrer les coracoïdes 25 et/ou les ailes 26 de la volaille. Les pinces 13 sont refermées par action du vérin 16, comme montré en traits mixtes à la figure 4. Les pinces 13 sont alors écartées l'une de l'autre, par pivotement vers l'extérieur des deux arbres cylindriques 8, avec un mouvement combiné d'avance du chariot 6, permettant l'arrachement des coracoïdes 25, ainsi que le décollement, vis-à-vis de la carcasse, des ailes 26, des omoplates 27, et de la partie avant des filets. En fin de décollement, il est procédé au desserrage des pinces, au recul du chariot et au rapprochement des pinces par pivotement des arbres 8. Les différentes positions des pinces au cours de ce processus sont représentées à la figure 2.

Comme il ressort de ce qui précède, l'invention apporte une grande amélioration à la technique existante, en fournissant un dispositif permettant de réaliser de façon rapide et sûre, l'arrachement des ailes et/ou des coracoïdes ainsi que le décollement des filets d'une volaille. Ce dispositif peut être utilisé indépendamment, ou peut être intégré dans une installation complexe de découpe de volailles.

## Revendications

1. Dispositif pour l'arrachement des ailes et/ou des coracoïdes d'une volaille, du type comportant des pinces destinées à enserrer les ailes, animées de mouvements de déplacement longitudinal et transversal, caractérisé en ce qu'il comporte un outil de contention (24) de la volaille par l'intérieur assurant l'immobilisation de celle-ci, un bâti (2, 3) sur lequel est monté déplaçable, en direction de l'outil de contention (24), et dans le plan médian longitudinal du dispositif, un chariot (6), dont l'extrémité avant est équipée de deux pinces (13) dont les ouvertures sont tournées du côté de l'outil de contention, et des moyens de commande tels que les pinces (13) étant en position ouverte et rapprochées l'une de l'autre, il est procédé successivement à un mouvement d'avance du chariot (6) jusqu'à ce que les pinces (13) viennent enserrer les ailes au niveau de leur articulation, à la fermeture des pinces, puis à un mouvement combiné d'avance du chariot (6) et de déplacement des pinces (13) vers l'extérieur, et enfin à l'ouverture des pinces avant leur rapprochement et avant le recul du chariot.

2. Dispositif selon la revendication 1, caractérisé en ce que le chariot (6) est équipé de deux arbres cylindriques (8) parallèles et orientés parallèlement à sa direction de déplacement, à l'extrémité libre de chacun desquels est fixée une pince (13) de façon excentrée, les deux pinces (13) étant montées de façon symétrique par rapport au plan médian longitudinal du dispositif, et des moyens étant prévus pour actionner les arbres cylindriques dans des sens de rotation inverses l'un de l'autre.

3. Dispositif selon la revendication 2, caractérisé en ce que les moyens d'entraînement en rotation des arbres (8) sont constitués par un vérin (9) disposé dans le plan médian longitudinal du dispositif et orienté perpendiculairement aux arbres, dont la tige (10) est équipée de moyens d'entraînement en rotation en sens inverse l'un de l'autre des deux arbres.

4. Dispositif selon l'une quelconque des revendications 1 à 3, caractérisé en ce que les moyens d'actionnement de chaque pince (13) sont constitués par un vérin (16) monté, à l'extrémité libre de l'arbre (8) considéré, sur le support (12) de cette pince.

5. Dispositif selon l'une quelconque de revendications 1 à 4, caractérisé en ce que l'axe de déplacement du chariot (6) portant les pinces forme un angle avec l'axe de l'outil (24) de contention de la volaille (23), l'axe de déplacement du chariot (6) étant incliné de haut en bas et de son extrémité la plus éloignée de la volaille (23) vers son extrémité la plus proche de celle-ci, dans la mesure où l'axe de l'outil de contention est horizontal.

6. Dispositif selon l'une quelconque des revendications 1 à 5, caractérisé en ce qu'il comprend également un système de blocage externe de la volaille sur l'outil de contention constitué par une pince (20) qui, destinée à venir pincer le sternum de la volaille est montée à l'extrémité de la tige (19) d'un vérin (18) d'axe vertical solidaire du bâti (2,3).

## Patentansprüche

1. Einrichtung zum Abreißen der Flügel und/oder der Rabenschnabelfortsätze eines Geflügels, umfassend Zangen zum Einklemmen der Flügel, welche zu Längsund Querverstellbewegungen antreibbar sind, dadurch **gekennzeichnet,** daß sie ein Haltewerkzeug (24) zum Halten des Geflügels von innen her umfaßt, mit dem dieses unbeweglich gehalten wird, ein Grundgestell (2, 3), auf welchem in Richtung zum Haltewerkzeug (24) und in der Längsmittelebene der Einrichtung verstellbar ein Schlitten (6) montiert ist, dessen Vorderende mit zwei Zangen (13) ausgestattet ist, deren Öffnungen dem Haltewerkzeug zugewandt sind, und Steuermittel der Art, daß bei geöffneten und einander angenäherten Zangen aufeinanderfolgend der Schlitten (6) vorgefahren wird, bis die Zangen (13) die Flügel im Bereich ihrer Gelenke erfassen, daß die Zangen geschlossen werden, daß dann eine kominierte Vorwärtsbewegung des Schlittens (6) und eine Verstellung der Zangen (13) nach außen durchgeführt wird, und daß schließlich die Zangen vor ihrer gegenseitigen Wiederannäherung und vor dem Rückzug des Schlittens geöffnet werden.

2. Einrichtung nach Anspruch 1, dadurch **gekennzeichnet,** daß der Schlitten (6) mit zwei parallelen und parallel zu dessen Verfahrrichtung angeordneten zylindrischen Wellen (8) versehen ist, an deren freiem Ende jeweils eine Zange (13) exzentrisch angeordnet ist, wobei die beiden Zangen (13) symmetrisch bezüglich der Längsmittelebene der Einrichtung montiert sind, und daß Mittel zum Antreiben der zylindrischen Wellen in einem einander entgegengesetzten Drehsinn vorgesehen sind.

3. Einrichtung nach Anspruch 2, dadurch **gekennzeichnet,** daß die Drehantriebsmittel der Wellen (8) durch einen Stellantrieb (9) gebildet sind, welcher in der Längsmittelebene der Einrichtung angeordnet und senkrecht zu den Wellen ausgerichtet ist und dessen Schubstange (10) mit Mitteln für den Drehantrieb der beiden Wellen in einem einander entgegengesetzten Sinn ausgestattet ist.

4. Einrichtung nach einem der Ansprüche 1 bis 3, dadurch **gekennzeichnet,** daß die Betätigungsmittel für jede der Zangen (13) durch einen Stellantrieb (16) gebildet sind, welcher jeweils am freien Ende der jeweiligen Welle (8) an dem Träger (12) dieser Zange montiert ist.

5. Einrichtung nach einem der Ansprüche 1 bis 4, dadurch **gekennzeichnet,** daß die Verstellachse des die Zangen tragenden Schlittens (6) einen Winkel mit der Achse des Haltewerkzeuges (24) für das Geflügel (23) bildet, wobei die Verstellachse des Schlittens (6) von oben nach unten und von seinem vom Geflügel (23) entfernten Ende zu dem diesem nahen Ende hin geneigt ist, für den Fall, daß die Achse des Haltewerkzeuges horizontal ist.

6. Einrichtung nach einem der Ansprüche 1 bis 5, dadurch **gekennzeichnet,** daß sie außerdem ein System zum externen Festhalten des Geflügels auf dem Haltewerkzeug umfaßt, welches von einer Zange (20) gebildet ist, die am Ende der Schubstange (19) eines mit dem Grundgestell (2, 3) fest verbundenen Stellantriebes (18) mit vertikaler Achse montiert ist, um das Brustbein des Geflügels zu klemmen.

## Claims

1. Device for pulling off the wings and/or coracoids of a fowl, of the type including grippers designed to grip the wings, having longitudinal and transverse movements, characterised in that it includes an implement (24) for holding the fowl internally and immobilising it, a frame (2, 3) on which is mounted, so as to move in the direction of the holding implement (24) and in the longitudinal mid-plane of the device, a carriage (6), the front end of which is fitted with two grippers (13), the openings of which are oriented towards the holding implement, and control means such that, with the grippers (13) in the open position and close to each other, the carriage (6) is moved forwards until the grippers (13) grip the wings at their articulation, the grippers are closed, then there is a combined forward movement of the carriage (6) and outward movement of the grippers (13), and finally the grippers open before they move together and the carriage withdraws.

2. Device according to Claim 1, characterised in that the carriage (6) is fitted with two parallel cylindrical shafts (8), oriented parallel to its direction of movement, at the free end of each of which a gripper (13) is fixed eccentrically, the two grippers (13) being mounted symmetrically with respect to the longitudinal mid-plane of the device, and means being provided to actuate the cylindrical shafts in directions of rotation which are opposite to each other.

3. Device according to Claim 2, characterised in that the means for rotating the shafts (8) consist of a ram (9), disposed in the longitudinal mid-plane of the device and oriented perpendicularly to the shafts, the stem (10) of which is equipped with means for rotating the two shafts in opposite directions to each other.

4. Device according to any one of Claims 1 to 3, characterised in that the means of actuating each gripper (13) consist of a ram (16) mounted, at the free end of the shaft (8) in question, on the support (12) of this gripper.

5. Device according to any one of Claims 1 to 4, characterised in that the axis of movement of the carriage (6) bearing the grippers forms an angle with the axis of the implement (24) for holding the fowl (23), the axis of movement of the carriage (6) being inclined from top to bottom, from, its end which is furthest away from the fowl (23) towards its end which is closest to the latter, insofar as the axis of the holding implement is horizontal.

6. Device according to any one of Claims 1 to 5, characterised in that it also comprises a system for the external clamping of the poultry on the holding implement consisting of a gripper (20) which, designed to grip the sternum of the fowl, is mounted at the end of the stem (19) of a ram (18), with a vertical axis, secured to the frame (2, 3).
